# FASCICULE DE BREVET EUROPEEN

(11) **EP 2 799 316 B1**
(45) Date de publication et mention de la délivrance du brevet: **11.07.2018**
(21) Numéro de dépôt: 14161219.2
(22) Date de dépôt: 24.03.2014
(51) Int. Cl.: B62D 65/02

(54) **Installation de dépose d'un pavillon sur la caisse d'un véhicule automobile**
Anlage zum Aufsatz eines Autoverdecks auf die Karosserie eines Kraftfahrzeugs
Installation for depositing a roof on the body of a motor vehicle

(30) Priorité: 30.04.2013 FR 1353934
(43) Date de publication de la demande: 05.11.2014
(73) Titulaire: PSA Automobiles SA, 78300 Poissy (FR)
(72) Inventeur: Joliveau, Philippe, 35310 CINTRE (FR); Epert, Didier, 22190 PLERIN (FR); Lefort, François, 35590 SAINT GILLES (FR)

(56) Documents cités:
- KR-A- 20090 098 157

## Description

La présente invention concerne une installation de dépose d'un pavillon sur la caisse d'un véhicule automobile.

Une installation de ce type comprend de façon en elle-même connue une table de recentrage d'un pavillon, un robot équipé d'une main de préhension permettant de prendre le pavillon sur cette table de recentrage et de le déplacer vers un poste de dépose du pavillon sur la caisse du véhicule.

La position de la caisse située dans le poste de dépose du pavillon est parfaitement connue, c'est-à-dire référencée géométriquement grâce à des supports équipés de centreurs.

En revanche, la main de préhension du robot n'est pas mise en référence par rapport à la table de recentrage lors de la prise du pavillon, ni par rapport au poste de dépose lors de la dépose du pavillon sur la caisse.

En raison de cette lacune, lors de la réalisation des trajectoires de prise du pavillon sur la table de recentrage et de dépose du pavillon sur la caisse, le roboticien (personne chargée de réaliser les trajectoires du robot) n'a pas de repère physique pour définir les positions théoriques de prise du pavillon sur la table de recentrage et de dépose du pavillon sur la caisse.

Ainsi, le roboticien doit s'y reprendre à plusieurs fois pour valider ces trajectoires tout en les modifiant à chaque fois afin de se rapprocher au plus près de leur position théorique, d'où un temps de mise au point très long et par conséquent coûteux.

Le but de la présente invention est de remédier à cet inconvénient. Le document KR 2009 0098157 A, qui est considéré comme l'état de la technique le plus proche, divulgue une installation de dépose d'un pavillon sur la caisse d'un véhicule automobile, comprenant une table de recentrage d'un pavillon, un robot équipé d'une main de préhension permettant de prendre le pavillon et de le déplacer vers un poste de dépose du pavillon sur la caisse du véhicule, l'installation comprenant des moyens de mise en référence de la main de préhension du robot par rapport au poste de dépose du pavillon sur la caisse, lors de cette dépose. Ce but est atteint, selon l'invention, grâce à une installation de dépose d'un pavillon sur la caisse d'un véhicule automobile, comprenant une table de recentrage d'un pavillon, un robot équipé d'une main de préhension permettant de prendre le pavillon et de le déplacer vers un poste de dépose du pavillon sur la caisse du véhicule, cette installation étant caractérisée en ce qu'elle comprend des moyens de mise en référence de la main de préhension du robot par rapport à la table de recentrage lors de la prise du pavillon par ladite main de préhension et par rapport au poste de dépose du pavillon sur la caisse, lors de cette dépose.

Ces moyens de mise en référence permettent au roboticien de déterminer très rapidement une trajectoire optimale pour la main de préhension, ce qui permet d'obtenir une dépose très précise du pavillon sur la caisse positionnée dans le poste de dépose du pavillon.

Dans une version préférée de l'invention, la table de recentrage est équipée d'au moins deux pilotes faisant saillie vers le haut et la main de préhension est équipée d'au moins deux canons pouvant s'engager sur les deux pilotes de la table de recentrage, ces deux pilotes étant en référence géométrique par rapport à la caisse du véhicule positionnée dans le poste de dépose du pavillon.

Le fait que les deux canons de la main de préhension puissent s'engager sur les deux pilotes de la table de recentrage permet ainsi de définir parfaitement la position géométrique de la main de préhension par rapport à la table de recentrage et également par rapport à la caisse du véhicule.

De préférence également, le poste de dépose du pavillon est équipé d'au moins deux pilotes faisant saillie vers le haut, les canons qui équipent la main de préhension pouvant s'engager sur les deux pilotes qui équipent le poste de dépose du pavillon.

Ainsi, les deux canons de la main de préhension peuvent également s'engager sur les deux pilotes qui équipent le poste de dépose du pavillon, ce qui permet de référencer la main de préhension également par rapport à la caisse située dans le poste de dépose.

Le roboticien peut ainsi déterminer avec une grande précision la trajectoire optimale de la main de préhension entre la table de recentrage et le poste de dépose du pavillon.

Selon d'autres particularités avantageuses de l'invention :
- les deux pilotes qui équipent la table de recentrage sont fixés sur deux supports respectifs eux-mêmes fixés verticalement à l'armature rigide de ladite table ;
- les deux canons qui équipent la main de préhension sont constitués par deux alésages réalisés dans deux supports respectifs fixés à l'armature rigide de ladite main de préhension, l'axe de chacun de ces alésages étant perpendiculaire au plan de la main de préhension ;
- les deux pilotes qui équipent le poste de dépose du pavillon sont fixés sur deux supports respectifs eux-mêmes fixés verticalement sur une structure rigide ;
- les deux pilotes et les deux supports qui équipent le poste de dépose du pavillon sont identiques à ceux qui équipent la table de recentrage.
- les deux pilotes qui équipent le poste de dépose du pavillon sont en référence géométrique par rapport à la caisse du véhicule positionnée dans le poste de dépose du pavillon.

D'autres particularités et avantages de l'invention apparaîtront encore tout au long de la description ci-après.

Aux dessins annexés, donnés à titre d'exemples, non limitatifs :
- la figure 1 est une vue en perspective de la table de recentrage du pavillon, d'une installation selon l'invention,
- la figure 2 est une vue en perspective de la main de préhension d'une installation selon l'invention,
- la figure 3 est une vue en perspective du poste de dépose d'un pavillon, selon l'invention,
- la figure 4 est une vue en élévation de la main de préhension de la figure 2 en position sur la table de recentrage selon la figure 1,
- la figure 5 est une vue agrandie de deux détails de la figure 4,
- la figure 6 est une vue en perspective à échelle agrandie des deux pilotes et de leur support qui équipent la table de recentrage,
- la figure 7 est une vue en perspective à échelle agrandie des deux canons qui équipent la main de préhension,
- la figure 8 est une vue en élévation montrant la main de préhension en position sur les deux pilotes qui équipent le poste de dépose du pavillon,
- la figure 9 est une vue en perspective à échelle agrandie montrant les deux pilotes engagés dans les deux canons de la main de préhension,
- la figure 10 est une vue des deux pilotes et de leur support qui équipent la structure du poste de dépose d'un pavillon.

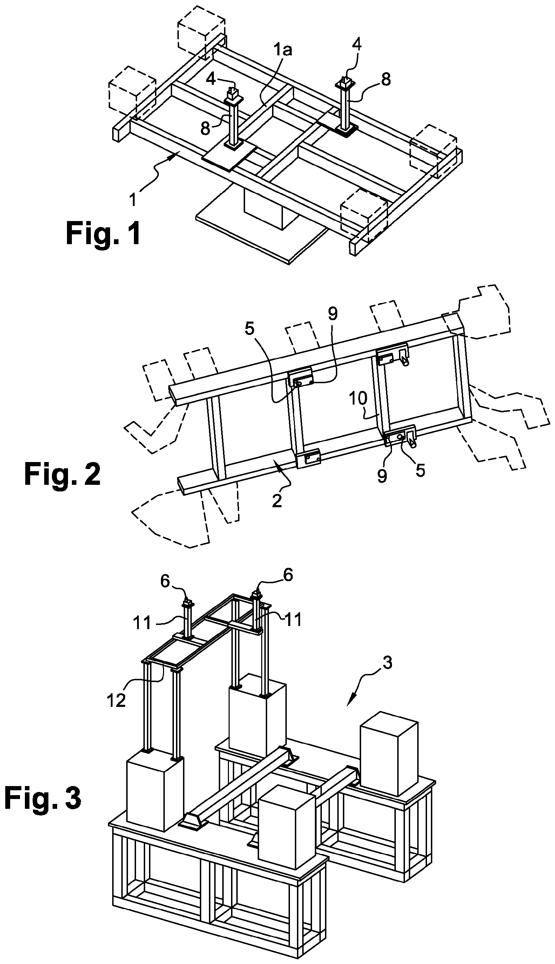

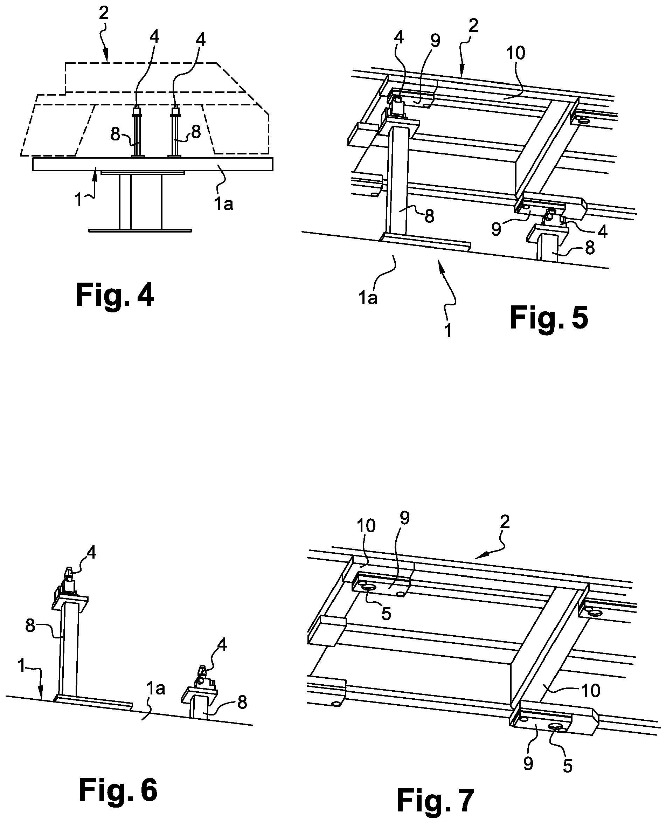

Les figures 1 à 10 représentent ensemble une installation de dépose d'un pavillon sur la caisse d'un véhicule automobile.

Cette installation comprend (voir figure 1) une table de recentrage 1 d'un pavillon (non représenté), une main de préhension 2 (voir figure 2) d'un robot permettant de prendre le pavillon et de le déplacer vers un poste 3 (voir figure 3) de dépose du pavillon sur la caisse du véhicule.

Conformément à l'invention, cette installation comprend des moyens de mise en référence de la main de préhension 2 du robot par rapport à la table de recentrage 1 lors de la prise du pavillon par la main de préhension 2 et par rapport au poste 3 de dépose du pavillon sur la caisse, lors de cette dépose.

Comme montré par les figures 1, 4, 5 et 6, la table de recentrage 1 est équipée de deux pilotes 4 faisant saillie vers le haut et la main de préhension 2 est équipée de deux canons 5 pouvant s'engager sur les deux pilotes 4 de la table de recentrage 1.

Ces deux pilotes 4 sont en référence géométrique par rapport à la caisse du véhicule positionnée dans le poste 3 de dépose du pavillon.

Les figures 3, 8, 9 et 10 montrent que le poste 3 de dépose du pavillon est équipé de deux pilotes 6 faisant saillie vers le haut.

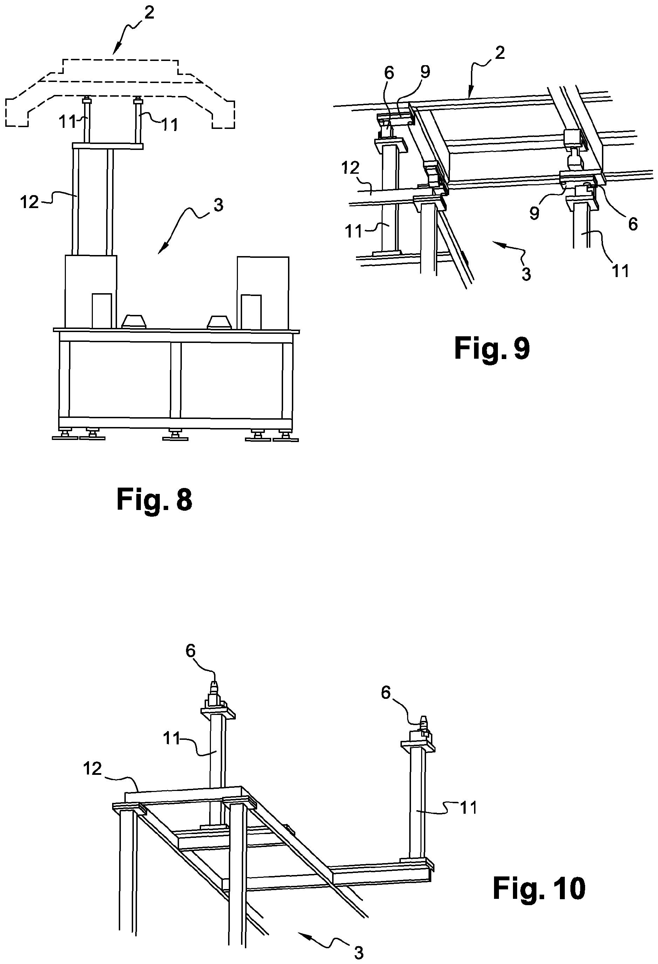

Les canons 5 qui équipent la main de préhension 2 peuvent s'engager, comme on le voit sur les figures 8 et 9, sur les deux pilotes 6 qui équipent le poste 3 de dépose du pavillon.

Dans l'exemple montré sur les figures 1, 4, 5 et 6 les deux pilotes 4 qui équipent la table de recentrage 1 sont fixés sur deux supports respectifs 7 eux-mêmes fixés verticalement à l'armature rigide 8 de la table 1.

Les figures 2, 5 et 7 montrent que les deux canons 5 qui équipent la main de préhension 2 sont constitués par deux alésages réalisés dans deux supports 9 fixés à l'armature rigide 10 de la main de préhension 2.

L'axe de chacun de ces alésages est perpendiculaire au plan de la main de préhension 2.

Les figures 3, 8, 9 et 10 montrent que les deux pilotes 6 qui équipent le poste 3 de dépose du pavillon sont fixés sur deux supports respectifs 11 eux-mêmes fixés verticalement sur une structure rigide 12.

Les deux pilotes 6 et les deux supports 11 qui équipent le poste 3 de dépose du pavillon sont identiques à ceux qui équipent la table de recentrage 1.

Par ailleurs, les pilotes 6 qui équipent le poste de dépose 3 du pavillon sont en référence géométrique par rapport à la caisse du véhicule positionnée dans le poste 3 de dépose du pavillon, tout comme les pilotes 4 qui équipent la table de recentrage.

Pour mettre en oeuvre l'invention, on réalise les premières trajectoires de la main de préhension 2, sans que celle-ci porte un pavillon.

A cet effet, avant de déplacer la main de préhension 2, on fixe sur celle-ci les supports 9 comportant chacun un canon 5, puis on installe sur la table de recentrage 1 les supports 8 équipés chacun d'un pilote 4.

On équipe le poste 3 de dépose d'un pavillon d'une structure fixe 12 sur laquelle on fixe deux supports 11 équipés chacun d'un pilote 6.

Le roboticien fait ensuite effectuer à la main de préhension 2 par le robot des trajectoires en venant positionner les canons de centrage 5 sur les pilotes 4 de la table de recentrage 1 et sur les pilotes 6 du poste 3 de dépose.

Lorsque la trajectoire de la main de préhension correspond à celle désirée, les pilotes 4, 6 et leur support sont enlevés de la table de recentrage 1 et du poste 3 de dépose du pavillon.

La structure 12 ajoutée au poste 3 de dépose est également enlevée.

La trajectoire de la main de préhension 2 est ensuite effectuée avec un pavillon.

Le principal avantage de l'invention que l'on vient de décrire réside dans le fait que sur le site le roboticien réalise très rapidement les trajectoires théoriques de prise et dépose du pavillon à l'aide de ses repères physiques (pilotes + canons de centrage).

Il peut à tout moment retrouver ces positions théoriques dans le cas où il aurait dû procéder à des déréglages ou bien en cas de démontage de la main suite à modifications.

## Revendications

1. Installation de dépose d'un pavillon sur la caisse d'un véhicule automobile, comprenant une table de recentrage (1) d'un pavillon, un robot équipé d'une main de préhension (2) permettant de prendre le pavillon et de le déplacer vers un poste (3) de dépose du pavillon sur la caisse du véhicule, cette installation étant **caractérisée en ce qu'**elle comprend des moyens de mise en référence de la main de préhension (2) du robot par rapport à la table de recentrage (1) lors de la prise du pavillon par ladite main de préhension (2) et par rapport au poste (3) de dépose du pavillon sur la caisse, lors de cette dépose.

2. Installation selon la revendication 1, **caractérisée en ce que** la table de recentrage (1) est équipée d'au moins deux pilotes (4) faisant saillie vers le haut et la main de préhension (2) est équipée d'au moins deux canons (5) pouvant s'engager sur les deux pilotes (4) de la table de recentrage (1), ces deux pilotes (4) étant en référence géométrique par rapport à la caisse du véhicule positionnée dans le poste (3) de dépose du pavillon.

3. Installation selon l'une des revendications 1 ou 2, **caractérisée en ce que** le poste (3) de dépose du pavillon est équipé d'au moins deux pilotes (6) faisant saillie vers le haut, les canons (5) qui équipent la main de préhension (2) pouvant s'engager sur les deux pilotes (6) qui équipent le poste (3) de dépose du pavillon.

4. Installation selon la revendication 2, **caractérisée en ce que** les deux pilotes (4) qui équipent la table de recentrage (1) sont fixés sur deux supports respectifs (8) eux-mêmes fixés verticalement à l'armature rigide (1a) de ladite table (1).

5. Installation selon l'une des revendications 2 à 4, **caractérisée en ce que** les deux canons (5) qui équipent la main de préhension (2) sont constitués par deux alésages réalisés dans deux supports respectifs (9) fixés à l'armature rigide (10) de ladite main de préhension (2), l'axe de chacun de ces alésages étant perpendiculaire au plan de la main de préhension (2).

6. Installation selon l'une des revendications 3 à 5, **caractérisée en ce que** les deux pilotes (6) qui équipent le poste (3) de dépose du pavillon sont fixés sur deux supports (11) respectifs eux-mêmes fixés verticalement sur une structure rigide (12).

7. Installation selon la revendication 6, **caractérisée en ce que** les deux pilotes (6) et les deux supports (11) qui équipent le poste (3) de dépose du pavillon sont identiques à ceux qui équipent la table de recentrage (1).

8. Installation selon l'une des revendications 6 ou 7, **caractérisée en ce que** les deux pilotes (6) qui équipent le poste (3) de dépose du pavillon sont en référence géométrique par rapport à la caisse du véhicule positionnée dans le poste (3) de dépose du pavillon.

## Patentansprüche

1. Vorrichtung zum Absetzen eines Daches auf einer Fahrzeugkarosserie, umfassend einen Zentriertisch (1) für ein Dach, einen Roboter, der mit einer Greifvorrichtung (2) ausgestattet ist, mit der das Dach aufgenommen und zu einer Station (3) zum Absetzen des Daches auf der Karosserie des Fahrzeugs bewegt werden kann, wobei diese Vorrichtung **dadurch gekennzeichnet ist, dass** sie Mittel zur Lagebestimmung der Greifvorrichtung (2) des Roboters in Bezug auf den Zentriertisch (1) umfasst, wenn das Dach von der Greifvorrichtung (2) aufgenommen wird, und in Bezug auf die Station (3) zum Absetzen des Daches auf der Karosserie während dieses Absetzvorgangs.

2. Vorrichtung nach Anspruch 1, **dadurch gekennzeichnet, dass** der Zentriertisch (1) mit mindestens zwei nach oben ragenden Fangstiften (4) und die Greifvorrichtung (2) mit mindestens zwei Hülsen (5) ausgestattet ist, die in die beiden Fangstifte (4) des Zentriertisches (1) einklinken können, wobei diese beiden Fangstifte (4) in geometrischem Bezug zu der in der Station (3) zum Absetzen des Daches befindlichen Karosserie stehen.

3. Vorrichtung nach einem der Ansprüche 1 oder 2, **dadurch gekennzeichnet, dass** die Station (3) zum Absetzen des Daches mit mindestens zwei nach oben ragenden Fangstiften (6) ausgestattet ist, wobei die Hülsen (5), mit denen die Greifvorrichtung (2) versehen ist, an den beiden Fangstiften (6), mit denen die Station (3) zum Absetzen des Daches ausgestattet ist, einklinken können.

4. Vorrichtung nach Anspruch 2, **dadurch gekennzeichnet, dass** die beiden Fangstifte (4), mit denen der Zentriertisch (1) ausgestattet ist, auf jeweils zwei Stützen (8) befestigt sind, die ihrerseits senkrecht an dem starren Gestell (1a) des Zentriertisches (1) befestigt sind.

5. Vorrichtung nach einem der Ansprüche 2 bis 4, **dadurch gekennzeichnet, dass** die beiden Hülsen (5), mit denen die Greifvorrichtung (2) ausgestattet ist, aus zwei Bohrungen bestehen, die in zwei an dem starren Gestell (10) der Greifvorrichtung (2) befestigten Haltern (9) ausgeführt sind, wobei die Achse jeder dieser Hülsen senkrecht zur Ebene der Greifvorrichtung (2) verläuft.

6. Vorrichtung nach einem der Ansprüche 3 bis 5, **dadurch gekennzeichnet, dass** die beiden Fangstifte (6), mit denen die Station (3) zum Absetzen des Daches ausgestattet ist, auf jeweils zwei Stützen (11) befestigt sind, die ihrerseits vertikal auf einer starren Struktur (12) befestigt sind.

7. Vorrichtung nach Anspruch 6, **dadurch gekennzeichnet, dass** die beiden Fangstifte (6) und die beiden Stützen (11), mit denen die Station (3) zum Absetzen des Daches ausgestattet ist, identisch sind mit denen, mit denen der Zentriertisch (1) ausgestattet ist.

8. Vorrichtung nach einem der Ansprüche 6 oder 7, **dadurch gekennzeichnet, dass** die beiden Fangstifte (6), mit denen die Station (3) zum Absetzen des Daches ausgestattet ist, in geometrischem Bezug zu der in der Station (3) zum Absetzen des Daches angeordneten Karosserie des Fahrzeugs stehen.

## Claims

1. Installation for depositing a roof on the body of a motor vehicle, comprising a table (1) for centring a roof, a robot equipped with a gripping hand (2) making it possible to take the roof and to move it to a station (3) for depositing the roof on the body of the vehicle, this installation being **characterised in that** it comprises means for referencing the gripping hand (2) of the robot with respect to the centring table (1) when the roof is gripped by said gripping hand (2) and with respect to the station (3) for depositing the roof on the body, during this deposition.

2. Installation according to claim 1, **characterised in that** the centring table (1) is equipped with at least two pilot pins (4) projecting upwards and the gripping hand (2) is equipped with at least two barrels (5) able to engage on the two pilot pins (4) of the centring table (1), these two pilot pins (4) being in geometric reference with respect to the body of the vehicle positioned in the station (3) for depositing the roof.

3. Installation according to either claim 1 or claim 2, **characterised in that** the station (3) for depositing the roof is equipped with at least two pilot pins (6) projecting upwards, the barrels (5) that equip the gripping hand (2) being able to engage on the two pilot pins (6) that equip the station (3) for depositing the roof.

4. Installation according to claim 2, **characterised in that** the two pilot pins (4) that equip the centring table (1) are fixed to two respective supports (8) themselves fixed vertically to the rigid framework (1a) of said table (1).

5. Installation according to any of claims 2 to 4, **characterised in that** two barrels (5) that equip the gripping hand (2) are formed by two bores produced in two respective supports (9) fixed to the rigid framework (10) of said gripping hand (2), the axis of each of these bores being perpendicular to the plane of the gripping hand (2).

6. Installation according to any of claims 3 to 5, **characterised in that** the two pilots (6) that equip the station (3) for depositing the roof are fixed to two respective supports (11) themselves fixed vertically to a rigid structure (12).

7. Installation according to claim 6, **characterised in that** the two pilot pins (6) and the two supports (11) that equip the station (3) for depositing the roof are identical to those that equip the centring table (1).

8. Installation according to either claim 6 or claim 7, **characterised in that** two pilot pins (6) that equip the station (3) for depositing the roof are in geometric reference with respect to the body of the vehicle positioned in the station (3) for depositing the roof.
